(19) **Europäisches Patentamt**

**European Patent Office**

**Office européen des brevets**

(11) **EP 0 882 977 B1**

(12) **FASCICULE DE BREVET EUROPEEN**

(45) Date de publication et mention
de la délivrance du brevet:
**13.12.2006 Bulletin 2006/50**

(51) Int Cl.:
***G01N 21/35*** (2006.01)

(21) Numéro de dépôt: **98401339.1**

(22) Date de dépôt: **05.06.1998**

(54) **Procédé et dispositif de détermination en temps réel du pouvoir calorifique d'un gaz naturel par voie optique**

Verfahren und Vorrichtung zur Echtzeit-Bestimmung des Heizwertes eines natürlichen Gases auf optischem Wege

Method and apparatus for real time determination of the calorific value of a natural gas by optical means

(84) Etats contractants désignés:
**AT BE CH DE DK ES FI FR GB GR IE IT LI LU MC NL PT SE**

(30) Priorité: **06.06.1997 FR 9707024**

(43) Date de publication de la demande:
**09.12.1998 Bulletin 1998/50**

(73) Titulaire: **GAZ DE FRANCE**
**75017 Paris (FR)**

(72) Inventeurs:
• **Pinvidic, Jean-Jacques**
**94220 Charenton-le-Pont (FR)**

• **Juen-Grenier, Laurence**
**13105 Mimet (FR)**
• **Pelous, Gérard**
**13100 Aix-en-Provence (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
**WO-A-96/06344      FR-A- 2 735 236**
**US-A- 3 950 101      US-A- 4 553 032**

**Description**

La présente invention a pour objet un procédé de détermination en temps réel du pouvoir calorifique d'un gaz naturel par voie optique, à partir de la mesure de l'absorption d'un faisceau lumineux par les composants du gaz, selon lequel on illumine le gaz par un faisceau lumineux de caractéristiques prédéterminées, on mesure l'intensité du faisceau lumineux après traversée du gaz, et on détermine par calcul le pouvoir calorifique du gaz naturel à partir de l'absorption optique obtenue à partir de la mesure de l'intensité du faisceau lumineux après traversée du gaz.

Il est souhaitable de pouvoir effectuer un comptage en énergie au point de livraison de gaz naturel, au moins pour certains utilisateurs, tels que des industriels, ou pour des groupes d'utilisateurs au sein d'un réseau de distribution publique.

Le comptage en énergie au point de livraison est défini comme la mesure au même endroit des grandeurs nécessaires pour déterminer la quantité d'énergie fournie. Ces grandeurs sont notamment le volume, la pression, la température, la composition du gaz, le pouvoir calorifique spécifique (PCS), le débit d'énergie.

Le point de livraison correspond au poste de détente où s'effectue la détente, la régulation et le comptage de gaz. Un tel poste de livraison est conçu pour garantir une continuité de la fourniture du gaz même en cas de défaillance de l'un des éléments du poste.

La composition du gaz naturel fourni dans des réseaux de transport et de distribution est susceptible de varier, ce qui se traduit par des variations du pouvoir calorifique du gaz et par suite, à volume égal de gaz distribué, par des variations de l'énergie fournie.

Les clients industriels des réseaux de transport et de distribution souhaitent pouvoir optimiser les procédés qui impliquent l'utilisation de gaz et par là-même, à défaut de connaître la composition exacte du gaz naturel utilisé, souhaitent pouvoir déterminer le pouvoir calorifique spécifique du gaz naturel qu'ils consomment.

Les fournisseurs de gaz souhaitent pour leur part connaître le pouvoir calorifique spécifique du gaz livré pour pouvoir assurer une facturation de leurs clients en fonction de la quantité d'énergie effective fournie plutôt qu'en fonction du simple volume de gaz distribué, qui correspond à des quantités d'énergie variables selon la valeur du pouvoir calorifique du gaz.

Pour toutes ces raisons, il est souhaitable de pouvoir déterminer le pouvoir calorifique spécifique (PCS) d'un gaz naturel avec une précision suffisante à mieux que 1 %, et si possible de l'ordre de 0,5 %, par un procédé dont le coût est raisonnable et la mise en oeuvre aisée.

On a déjà proposé d'effectuer la mesure du PCS à l'aide de chromatographes rapides ou de calorimètres. Ces méthodes restent relativement coûteuses et ne sont pas pleinement satisfaisantes pour l'application envisagée, car elles nécessitent d'effectuer des prélèvements de gaz, d'effectuer des mesures dans des cabines d'essai spécifiques, d'utiliser des gaz étalons et impliquent une durée qui ne correspond pas à des mesures en temps réel.

On a encore proposé, notamment dans le document FR-A-2 735 236, d'utiliser une technique infrarouge pour effectuer des mesures de pouvoir calorifique d'un gaz naturel. Selon cette technique, on sélectionne préalablement dans le proche infrarouge une raie d'absorption spécifique de chaque composant du gaz, on éclaire le gaz par un faisceau laser ayant une longueur d'onde voisine de celle des raies d'absorption sélectionnées et une largeur spectrale inférieure à celle des raies d'absorption sélectionnées, on fait varier la longueur d'onde du faisceau lumineux pour balayer les raies d'absorption sélectionnées, on mesure l'intensité du faisceau lumineux après traversée du gaz aux longueurs d'onde des raies d'absorption sélectionnées et en dehors de ces raies et on déduit par le calcul les concentrations relatives des composants du gaz et le pouvoir calorifique de ce gaz.

Un tel procédé implique la mise en oeuvre de systèmes à diode laser accordable ou équivalent, qui sont coûteux, et applique des méthodes spectroscopiques à haute résolution dont la mise en oeuvre reste complexe, qui nécessitent une bonne connaissance préalable de la nature et de la composition du gaz, pour pouvoir déterminer ensuite le pouvoir calorifique avec une précision suffisante, et ne peuvent pas s'appliquer de façon correcte à des gaz naturels dont les composants ne présentent pas une structure de raies bien isolées, ou présentent des bandes d'absorption qui se chevauchent partiellement ou totalement.

La présente invention vise à remédier aux inconvénients précités et à permettre de réaliser en temps réel, in situ, de façon commode et peu coûteuse, une mesure précise du pouvoir calorifique spécifique d'un gaz naturel, quelle que soit sa composition parmi un échantillon large de compositions possibles, et sans qu'il soit nécessaire de faire appel à du personnel spécialisé ou à des matériels autres que ceux qui sont utilisés de façon standard dans les télécommunications.

Ces buts sont atteints grâce à un procédé de détermination en temps réel du pouvoir calorifique d'un gaz naturel par voie optique, à partir de la mesure de l'absorption d'un faisceau lumineux par les composants du gaz, selon lequel on illumine le gaz par un faisceau lumineux de caractéristiques prédéterminées, on mesure l'intensité du faisceau lumineux après traversée du gaz, et on détermine par calcul le pouvoir calorifique du gaz naturel à partir de l'absorption optique obtenue à partir de la mesure de l'intensité du faisceau lumineux après traversée du gaz, caractérisé en ce que l'on illumine le gaz à l'aide d'un faisceau lumineux définissant trois bandes de mesure définissant des plages de longueurs d'onde différentes présentant chacune une largeur de 10 à 20 nm et situées dans le proche infrarouge, en ce que les bandes de mesure définissent des domaines de longueurs d'onde situés hors des domaines d'absorption des composants non hydrocarbonés, et en ce que l'on utilise en outre une bande de référence définissant une plage de longueurs d'onde de largeur comprise entre 10 et 20 nm et située dans le proche infrarouge en dehors des plages de longueurs d'onde des bandes de mesure et des domaines d'absorption du gaz.

De façon préférentielle, les bandes de mesure sont situées dans les plages de longueurs d'onde suivantes 1,111 à 1,190 $\mu$m, 1,315 à 1,429 $\mu$m et 1,613 à 1,818 $\mu$m, dans lesquelles les hydrocarbures constituant le gaz naturel y présentent des absorptions significatives.

A titre d'exemple, on définit trois bandes de mesure comprises entre les longueurs d'onde suivantes : de 1,176 à 1,190 $\mu$m ; de 1,315 à 1,325 $\mu$m ; de 1,62 à 1,64 $\mu$m.

La bande de référence peut elle-même définir une plage de longueurs d'onde situées entre 1,24 et 1,25 $\mu$m.

Selon un aspect du procédé, on mesure en outre la pression et la température du gaz et on prend en compte les valeurs de pression p et de température $\theta$ du gaz mesurées, lors de la détermination par le calcul du pouvoir calorifique du gaz naturel.

Pour améliorer la précision du résultat, on peut calculer le pouvoir calorifique du gaz naturel à partir de l'accumulation d'un nombre N supérieur à 5, et par exemple voisin de 10, de mesures élémentaires de l'intensité du faisceau lumineux ayant traversé le gaz.

Le faisceau lumineux définit trois bandes de mesure et le pouvoir calorifique spécifique (PCS) du gaz naturel est déduit de la mesure des coefficients de transmission $T_1$, $T_2$, $T_3$ du gaz naturel dans les trois bandes de mesure à l'aide de la relation suivante :

$$PCS = \alpha + \beta_1 \ln(T_1) + \delta_2 \ln(T_2) + \gamma_3 \ln(T_3)$$

où $\alpha$, $\beta_1$, $\delta_2$ et $\gamma_3$, représentent des coefficients déterminés à partir d'essais d'étalonnage.

Le faisceau lumineux définit trois bandes de mesure et le pouvoir calorifique spécifique (PCS) du gaz naturel est déduit de la mesure des coefficients de transmission $T_1$, $T_2$, $T_3$ du gaz naturel dans les trois bandes de mesure à l'aide de la relation suivante :

$$PCS = (\alpha_1 (\theta/p) + \alpha_2) + (\beta_{11} (\theta/p) + \beta_{12}) \ln(T_1)$$
$$+ (\delta_{21} (\theta/p) + \delta_{22}) \ln(T_2) + (\gamma_{31} (\theta/p) + \gamma_{32}) \ln(T_3),$$

où $\alpha_1$, $\alpha_2$, $\beta_{11}$, $\beta_{12}$, $\delta_{21}$, $\delta_{22}$, $\gamma_{31}$, $\gamma_{32}$ représentent des coefficients déterminés à partir d'essais d'étalonnage.

Avantageusement, le coefficient de transmission Ti (i = 1 à 3) du gaz naturel dans une bande de mesure est déterminé par le rapport entre l'intensité lumineuse $I_1$ mesurée dans la bande de mesure concernée et l'intensité lumineuse $I_r$ mesurée dans la bande de référence.

D'autres caractéristiques et avantages de l'invention ressortiront de la description suivante de modes particuliers de réalisation de l'invention, en référence aux dessins annexés, sur lesquels :

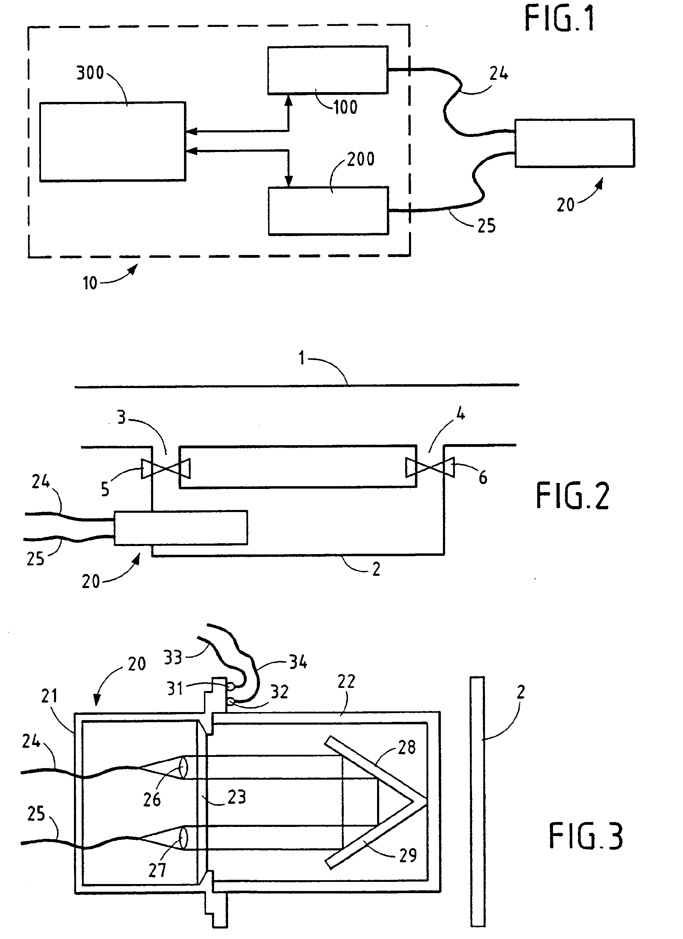

- la figure 1 est un schéma-bloc montrant l'architecture d'ensemble d'un dispositif de comptage de gaz mettant en oeuvre l'invention,
- la figure 2 est un schéma montrant l'implantation d'une tête de mesure d'un dispositif de comptage pour la mise en oeuvre du procédé selon l'invention, par rapport à une canalisation de transport de gaz,
- la figure 3 est un schéma montrant de façon plus détaillée un exemple de réalisation d'une tête de mesure d'un dispositif de comptage pour la mise en oeuvre du procédé selon l'invention,
- la figure 4 est un schéma d'un premier exemple de bloc d'émission utilisable dans le dispositif de comptage de la figure 1,
- la figure 5 est un schéma d'un deuxième exemple de bloc d'émission utilisable dans le dispositif de comptage de la figure 1,
- la figure 6 est un schéma d'un premier exemple de bloc de réception utilisable dans le dispositif de comptage de la figure 1,
- la figure 7 est un schéma d'un deuxième exemple de bloc de réception utilisable dans le dispositif de comptage de la figure 1, et
- la figure 8 est un schéma bloc d'un exemple de réalisation d'un module électronique de commande utilisable dans

3

le dispositif de comptage de gaz de la figure 1.

L'architecture d'ensemble d'un dispositif mettant en oeuvre le procédé selon l'invention est illustrée sur la figure 1.

Une tête de mesure 20 est placée directement sur la canalisation d'alimentation en gaz naturel, ou sur une conduite de dérivation. Cette tête de mesure 20 est reliée à une armoire de comptage 10 par des fibres optiques 24 et 25. Ces fibres optiques 24, 25 peuvent présenter une longueur de l'ordre de 200 mètres, de sorte que seuls des éléments optiques véhiculant de faibles puissances, inférieures à 5 mW, sont au contact du gaz, tandis que les éléments électriques sont placés dans une zone sans risque de déflagration.

A titre d'exemple, les fibres optiques 24, 25 peuvent être des fibres multimodes, silice/silice HCL de la Société SPECTRAN, de diamètre de coeur 550 $\mu$m et de diamètre extérieur 750 $\mu$m. L'absorption de telles fibres optiques est inférieure à 10 dB/km, soit inférieure à 40 % pour 200 mètres. Naturellement, pour des distances de liaison plus courtes, de l'ordre de quelques dizaines de mètres, des fibres optiques polymères moins onéreuses peuvent aussi être utilisées.

L'armoire de comptage 10 comporte essentiellement un bloc d'émission 100 qui génère un signal lumineux appliqué à la fibre optique 24 pour ensuite traverser le gaz à analyser dans la tête de mesure 20 et y être en partie absorbé. La part du signal lumineux non absorbée par le gaz circule dans la fibre optique 25 pour être appliquée au bloc réception 200 où le signal lumineux est collecté et transformé en un signal analogique, puis converti en un signal numérique. Le traitement des mesures et la synchronisation des différentes opérations sont effectués au sein du module électronique de commande 300 qui est relié de façon fonctionnelle au bloc d'émission 100 et au bloc de réception 200.

La tête de mesure 20 peut être disposée transversalement par rapport à la conduite dans laquelle circule le gaz. La tête de mesure 20 peut aussi avantageusement être implantée sur une conduite de dérivation 2 qui est disposée en parallèle par rapport à la canalisation principale 1 (figure 2), ce qui permet de réaliser les opérations de maintenance sans perturber la livraison du gaz. La conduite de dérivation 2 débouche dans la canalisation principale 1 par deux tronçons de conduite 3, 4 sur lesquels sont disposées des vannes d'isolement 5, 6.

Dans le mode de réalisation de la figure 2, la tête de mesure 20 se situe au niveau où débouche le tronçon de conduite d'entrée 3 et l'axe de la tête de mesure et du trajet optique (par exemple d'une longueur de 0,3 m) se situe, selon l'axe du tronçon de la conduite de dérivation 2 qui est parallèle à la canalisation principale 1. Une telle implantation permet une standardisation du matériel puisque, dans ce cas, il n'est pas nécessaire d'adapter les interfaces mécaniques et la longueur du trajet optique à une multitude de diamètres de canalisation.

On a représenté sur la figure 3 un exemple de tête de mesure 20 pour effectuer une mesure dans une conduite 2, soit selon l'axe de cette conduite, comme indiqué précédemment, soit transversalement. Cette tête de mesure 20 comprend un boîtier 21 dans lequel pénètrent les fibres optiques 24, 25, ce boîtier 21 comportant une paroi 23 en forme de hublot qui constitue une portion de paroi de la conduite de gaz 2 et permet à des éléments optiques de collimation 26, 27 disposés dans le boîtier 21 d'émettre vers l'intérieur de la conduite de gaz un faisceau lumineux incident issu de la première fibre optique 24 et de recevoir en retour un faisceau lumineux réfléchi. Le faisceau lumineux issu de la fibre optique 24 est ainsi transformé en un faisceau parallèle par la lentille 26, pour traverser le mélange gazeux, ce qui offre l'avantage d'augmenter le volume d'échantillonnage et de minimiser le risque d'incidents sur le parcours. Le faisceau lumineux issu de la lentille 26 est réfléchi par un rétroréflecteur composé de trois miroirs 28, 29 constitués par un coin de cube qui est un trièdre trirectangle réflecteur. Le rétroréflecteur renvoie un faisceau parallèle vers la lentille 27 qui focalise à nouveau le faisceau lumineux sur la fibre optique de retour 25. Une enveloppe poreuse filtrante 22 prolonge le boîtier 21 à l'intérieur de la conduite 22 et assure le support mécanique des miroirs 28, 29. Cette enveloppe 22 est constituée d'un matériau perméable au gaz mais étanche aux poussières de façon à limiter les dépôts d'impuretés sur les faces du coin de cube disposé à l'intérieur de l'enveloppe 22, ainsi que sur le hublot 23. Des capteurs 31, 32 de température et de pression peuvent être disposés dans la conduite 2 au voisinage de la tête de mesure 20 et sont reliés à l'armoire de comptage 10 par des câbles de liaison 33, 34.

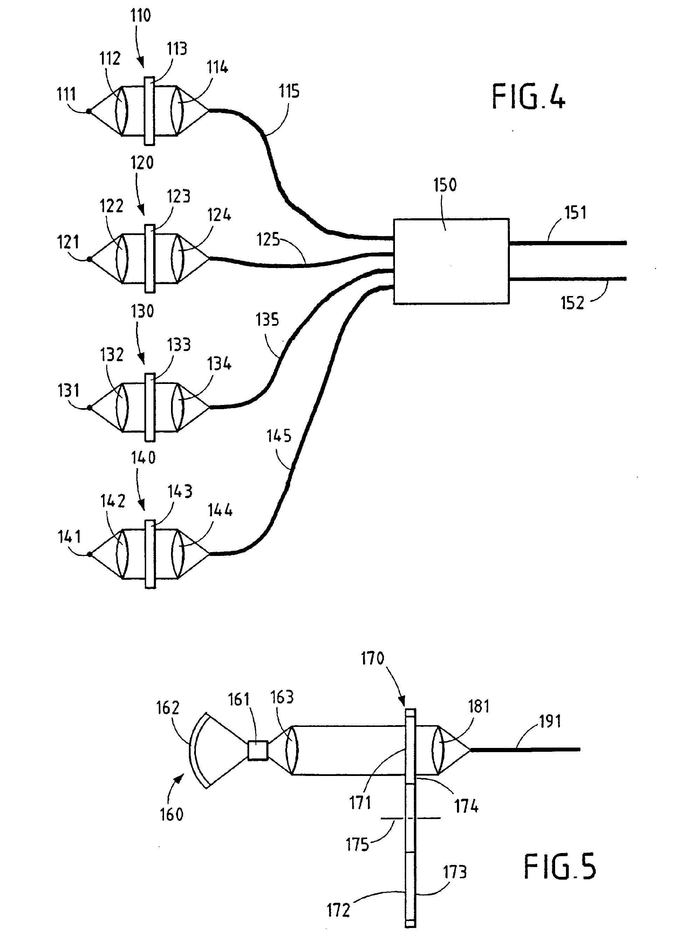

Avant de décrire différents exemples de réalisation des éléments fonctionnels de l'armoire de comptage 10, en référence aux figures 4 à 8, on trouvera ci-dessous les caractéristiques essentielles du procédé selon l'invention de détermination du pouvoir calorifique spécifique (PCS) du gaz naturel.

Selon l'invention, on procède à la mesure optique de l'absorption du gaz naturel circulant dans une conduite, dans différentes bandes de longueurs d'onde situées dans le proche infrarouge et présentant chacune une largeur de 10 à 20 nm. La mesure s'effectue ainsi de façon relative, puisqu'elle repose sur l'établissement d'un lien direct entre le PCS et l'absorption infrarouge, sans détermination préalable de la concentration en chacun des constituants.

A titre d'exemple préférentiel, on utilise les trois bandes de mesure de longueurs d'onde suivantes :

bande 1 : 1,176 - 1,190 $\mu$m (avec un coefficient de transmission moyen $T_1$ = 85 % pour un trajet optique de 0,3 m).

bande 2 : 1,315 - 1,325 $\mu$m (avec un coefficient de transmission moyen $T_2$ = 90 % pour un trajet optique de 0,3 m).

bande 3 : 1,62 - 1,64 $\mu$m (avec un coefficient de transmission noyen $T_3$ : 75 % pour un trajet optique de 0,3 m).

Ces trois bandes de mesure correspondent à des domaines de longueurs d'onde situés hors des domaines d'absorption des composants non hydrocarbonés. Les bandes 2 et 3 sont principalement sensibles au méthane tandis que la bande 1 est principalement sensible aux autres alcanes.

D'une façon plus générale, les différentes bandes de mesure d'une largeur de 10 à 20 nm situées dans le proche infrarouge sont avantageusement choisies à l'intérieur des trois zones suivantes pour lesquelles les hydrocarbures constituant le gaz naturel présentent des absorptions significatives :

1,111 à 1,190 $\mu$m
1,333 à 1,429 $\mu$m
1,613 à 1,818 $\mu$m

Le fait de travailler dans le proche infrarouge permet d'utiliser des sources de lumière et des photodétecteurs non refroidis, contrairement au cas des domaines de plus grandes longueurs d'onde pour lesquels les réalisations deviennent plus complexes.

Le PCS peut être déduit de l'absorption optique du fait que, en particulier pour les longueurs d'onde des domaines définis ci-dessus, le PCS comme l'absorption optique sont liés à la structure de la molécule et notamment au nombre de liaisons C - H qu'elle contient.

La prise en compte de bandes relativement larges de longueurs d'onde (10 à 20 nm) pour mesurer l'absorption optique d'un faisceau lumineux par le gaz naturel contenant un mélange d'alcanes est importante car il n'existe pas de structure de raies bien isolées, sauf pour le méthane, et il existe une superposition plus ou moins totale des bandes d'absorption des différents constituants.

Si l'on prend en compte trois bandes de mesure de longueurs d'onde, telles que les bandes 1 à 3, le PCS du gaz naturel analysé peut être déduit de la mesure des coefficients de transmission $T_1$, $T_2$, $T_3$ du gaz naturel dans les trois bandes de mesure à l'aide de la relation suivante :

$$PCS = \alpha + \beta_1 \ \ln (T_1) + \delta_2 \ln (T_2) + \gamma_3 \ln (T_3)$$

où $\alpha$, $\beta_1$, $\delta_2$ et $\gamma_3$ représentent des coefficients déterminés à partir d'essais d'étalonnage, de façon à minimiser les écarts entre les valeurs de PCS calculées de façon théorique ou mesurées par un moyen étalonné pour un ensemble d'échantillons de mélanges gazeux de compositions diverses connues couvrant une large gamme de concentration en hydrocarbures et les valeurs de PCS déduites des valeurs de transmission $T_1$, $T_2$, $T_3$ sur les différentes bandes de mesure pour lesdits échantillons de mélange gazeux.

Pour les échantillons de mélanges gazeux utilisés, la composition peut être définie en termes de concentrations molaires corrigées de phénomènes de non idéalité du mélange. Ainsi, on peut définir une concentration molaire corrigée Xi qui est égale au rapport entre la fraction molaire du composé i et le coefficient de compressibilité du mélange gazeux considéré Z. Ceci permet de s'affranchir de la détermination du coefficient de compressibilité du mélange étudié.

Lors de l'étude d'échantillons de mélanges gazeux d'hydrocarbures, représentant différents types de gaz naturel et contribuant à la détermination des coefficients permettant de calculer le PCS à partir des coefficients de transmission moyens $T_1$, $T_2$, $T_3$ dans chaque bande de mesure, le coefficient de transmission d'un mélange $T\lambda$ pour une longueur d'onde donnée est modélisé à partir de la formule suivante :

$$T\lambda = \exp \left(- (\Sigma_i x_i \ \alpha_{i\lambda}) \ . \ (P_t\ell) \ / \ (Z \ \theta) \right)$$

où :

$x_i$ : fraction molaire du composé i

$\alpha_{i\lambda}$ : coefficient d'absorption du composé i à la longueur d'onde $\lambda$

$P_t$ : pression totale

$\ell$ : longueur du trajet optique

Z : coefficient de compressibilité du mélange

$\theta$ : température (K)

Les spectres de transmission de chacun des mélanges étudiés sont calculés spectralement selon ce principe. Puis, ils sont intégrés sur les trois bandes de longueurs d'onde définies précédemment, de façon à déterminer des coefficients de transmission moyens ($T_1$, $T_2$, $T_3$) sur chaque bande.

Les PCS théoriques exprimés en kcal par mole de mélange, sont déduits de la relation :

$$PCS_{mol} = \Sigma_i (x_i\, PCS_{mol\,i})$$

où:

$x_i$: fraction molaire du composé i

$PCS_{mol\,i}$: $PCS_{mol}$ du composé i

Le volume molaire du mélange s'exprimant :

$$V_{mol} = (Z\, R\, \theta)\,/\,(P_t),$$

où R est la constante des gaz parfaits et Z, $\theta$ et $P_t$ ont la signification indiquée ci-dessus,

on peut définir un PCS caractéristique par unité de volume de mélange :

$$PCS_{vol} = (\Sigma_i (x_i\, PCS_i))\,.\,((P_t)\,/\,(Z\, R\, \theta)$$

On notera que le $PCS_{molaire}$, contrairement au $PCS_{volumique}$, est indépendant des conditions de température et de pression.

Cependant, dans une optique de comptage d'énergie, et utilisé en association avec une mesure de débit volumique, c'est bien le second qui présente un intérêt, et qui par conséquent, sera utilisé ici comme référence.

Les températures de livraison externes de gaz naturel peuvent être évaluées à - 20°C et + 30°C.

Les pressions de livraison habituelles sont de 4 bar, mais peuvent dans certains cas s'élever à 10 ou 16 bar.

Dans le cas d'une pression de livraison de 4 bar, les valeurs de pression extrême peuvent être de 3,5 et 4,5 bar.

Un parcours optique de 0,3 m est bien adapté à une pression de livraison moyenne de 4 bar.

Pour des pressions de 10 bar et 16 bar, le parcours optique devrait être réduit respectivement à 12 cm et 7,5 cm.

Dans la détermination du PCS à partir des valeurs de transmission optique moyennes $T_1$, $T_2$, $T_3$ dans les différentes bandes de mesure, la précision peut être améliorée si les coefficients déterminés pour minimiser les écarts entre les valeurs du PCS obtenues de façon théorique et celles obtenues à partir de la détermination de l'absorption optique, prennent en compte la température $\theta$ du gaz et la pression P du gaz au voisinage de la tête de mesure.

Dans ce cas, le procédé selon l'invention permet de déterminer le PCS à partir de la formule suivante :

$$PCS = (\alpha_1\,(\theta/p) + \alpha_2) + (\beta_{11}\,(\theta/p) + \beta_{12})\,\ln(T_1)$$
$$+ (\delta_{21}\,(\theta/p) + \delta_{22})\,\ln(T_2) + (\gamma_{31}\,(\theta/p) + \gamma_{32})\,\ln(T_3),$$

Si les essais d'étalonnage prennent en compte un nombre significatif de mélanges gazeux de compositions voisines mais différentes par exemple de cinq à cinquante mélanges différents de façon à représenter un éventail représentatif de gaz naturels de compositions diverses, et si en outre on prend en compte les conditions de température et de pression, on parvient à une très grande concordance entre les calculs de PCS effectués de façon théorique et la détermination du PCS selon la méthode conforme à l'invention, l'écart moyen entre la théorie et la mesure étant quasi-nul.

La présence de l'enveloppe 22 poreuse vis-à-vis du gaz, mais étanche aux poussières, permet de limiter les dépôts sur les éléments optiques et d'éviter une absorption parasite due à la traversée du faisceau optique par de tels éléments non gazeux. La présence d'un faisceau lumineux parallèle contribue également à augmenter le volume d'échantillonnage et à minimiser le risque d'incidents sur le parcours dus à des impuretés résiduelles.

Des impuretés peuvent toutefois finir par se déposer sur les éléments optiques et par un phénomène cumulatif peuvent dégrader la dynamique de mesure.

Pour pallier cet inconvénient, on peut utiliser une bande de référence de longueurs d'onde, située hors des domaines d'absorption du gaz (par exemple dans la plage 1,24 à 1,25 $\mu$m) pour normer les transmissions dans chacune des bandes de mesure.

Dans ce cas, la transmission optique normée $T_i$ dans la bande i est donnée par :

$$T_i = I_i/I_r$$

où $I_i$ est l'intensité lumineuse mesurée sur la bande i et

$I_r$ est l'intensité lumineuse mesurée sur la bande de référence.

L'intensité $I_r$ mesurée sur la bande de référence renseigne en outre sur la propreté des éléments optiques et constitue un moyen d'auto - test pour le dispositif.

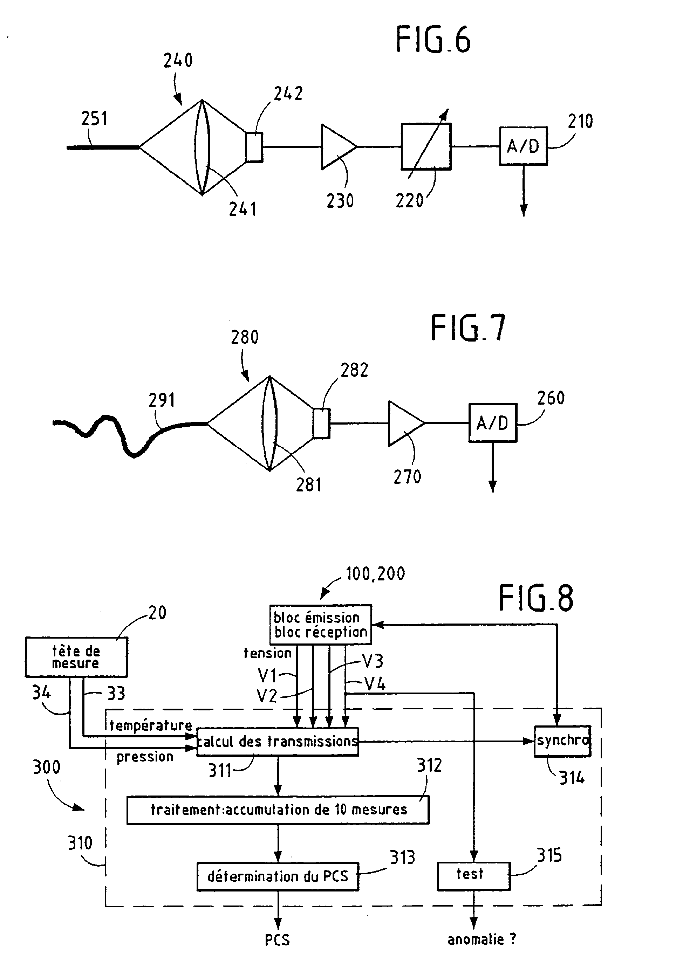

On décrira maintenant en référence aux figures 4 et 6 un premier mode de réalisation du bloc d'émission 100 et du bloc de réception 200.

Selon ce mode de réalisation, la source lumineuse du bloc d'émission 100 comprend pour chaque bande de mesure un module d'émission 110, 120, 130, 140 qui est relié par une fibre optique 115, 125, 135, 145 à un dispositif 150 de couplage optique (figure 4).

Chaque module d'émission 110, 120, 130, 140 comprend une diode électroluminescente 111, 121, 131, 141 émettant sur un spectre étroit de longueurs d'onde, de l'ordre de quelques dizaines de nanomètres, par exemple 100 nm, une première lentille 112, 122, 132, 142 qui répartit le faisceau de la diode électroluminescente correspondante 111, 121, 131, 141 sur un filtre interférentiel 113, 123, 133, 143 et une deuxième lentille 114, 124, 134, 144 qui focalise le faisceau issu du filtre interférentiel correspondant 113, 123, 133, 143 sur la fibre optique correspondante 115, 125, 135, 145.

Les puissances disponibles avec ce type de source sont d'environ 1,60 $\mu$W/nm.

Chaque bande de mesure possède ainsi sa source 111, 121, 131, 141 dont l'émission est modulée à une fréquence f1, f2, f3, f4 qui lui est propre, par exemple 500, 1150, 1600, 2200 Hz. Les longueurs d'onde d'intérêt sont sélectionnées pour chaque module d'émission 110, 120, 130, 140 par le filtre interférentiel correspondant 113, 123, 133, 143 dont la transmission peut être de l'ordre de 50 %.

L'émission totale de lumière fournie par le dispositif de couplage 150 est répartie sur deux voies :

a) une voie de mesure, recevant environ 90 % de l'énergie, et qui est reliée à la tête de mesure par une fibre optique 151 qui correspond à la fibre optique 24 des figures 1 à 3, pour émettre un faisceau lumineux vers la conduite de gaz, et

b) une voie de contrôle, recevant environ 10 % de l'énergie, qui reste disponible sur une fibre optique 152 pour tester le bon fonctionnement des sources lumineuses en mode autotest et lors d'opérations de maintenance. Le couplage optique de réunion de quatre voies puis de répartition en deux voies peut être réalisé au sein du dispositif de couplage 150 par exemple par deux coupleurs multimodes ATI 4/1 et 1/2 (10 % - 90 %) placés en série. L'efficacité d'un tel couplage peut être de l'ordre de 40 %.

Dans le bloc de réception 200 illustré sur la figure 6, en sortie de la fibre optique 251 qui correspond à la fibre optique 25 des figure 1 à 3, le signal est appliqué à un photodétecteur 240 qui comprend une lentille 241 de focalisation sur un détecteur qui peut être constitué par exemple par une photodiode 242, typiquement une photodiode In Ga As présentant un courant d'obscurité de l'ordre de 3nA et une réponse de 0,9 A/W à 1300 nm.

Le signal incident sur le détecteur 242 est la somme de quatre composantes modulées aux quatre fréquences différentes f1, f2, f3, f4 et contenant chacune l'information relative à une voie de mesure. Le signal issu de la photodiode 242 est traité dans un amplificateur à courant alternatif 230 qui transforme l'information en courant fournie par la photodiode 242 en une information en tension d'un niveau maximum par exemple proche de 5 volts.

Un démodulateur 220 reçoit le signal de tension issu de l'amplificateur 230 et réalise un filtrage du signal aux quatre fréquences de modulation f1, f2, f3, f4 (soit 500, 1150, 1600 et 2200 Hz dans l'exemple considéré). L'information relative à chaque voie de mesure est finalement numérisée dans un convertisseur analogique-numérique 210 qui délivre un signal numérique au microprocesseur 310 du module électronique de commande 300. A titre de variante, le filtrage peut ne pas être réalisé de façon analogique dans un démodulateur 220. Dans ce cas, le signal de sortie de l'amplificateur 230 est numérisé directement par le convertisseur analogique-numérique 210 et l'on utilise le microprocesseur 310 pour séparer les différentes fréquences par filtrage numérique et calculer les amplitudes à ces différentes fréquences.

Un autre mode de réalisation du bloc d'émission 100 et du bloc de réception 200 est illustré sur les figures 5 et 7.

Dans le bloc d'émission 100 illustré sur la figure 5, la source lumineuse 160 comprend une source unique à large spectre (corps noir) telle qu'une lampe tungstène-halogène 161 associée à un réflecteur 162 et à une première lentille 163 qui crée un faisceau lumineux parallèle.

A titre d'exemple, pour une lampe 161 de 20 W, la puissance captée par la lentille, si celle-ci a un diamètre de 2 cm et est placée à 5 cm de la lampe, est d'environ 60 $\mu$W/nm entre 1 et 2 $\mu$m. On peut considérer que la focalisation sur la fibre optique 191 (qui correspond à la fibre optique 24 des figures 1 à 3) à l'aide d'une deuxième lentille 181 permet de récupérer 10 % de l'énergie, soit 6 $\mu$W/nm.

Une roue 170 pouvant tourner autour d'un axe de rotation 175 porte des filtres interférentiels 171, 172, 173, 174 définissant les bandes de mesure et est interposée entre les lentilles 163 et 181, c'est-à-dire entre la source lumineuse 160 et la fibre optique 191 pour permettre la sélection successive des longueurs d'onde caractéristiques des quatre voies de mesure. Il est ainsi réalisé une modulation temporelle, la cadence de mesure étant liée à la vitesse de rotation de la roue 170. A titre d'exemple, pour fonctionner à 10 Hz, la roue doit tourner à 600 tours/mn. Le filtrage amène les puissances transportées par la fibre optique 191 en dessous des seuils de sécurité.

Dans le bloc de réception 200 illustré sur la figure 7, la fibre optique 291 et le photodétecteur 280 avec sa lentille 281 et son détecteur 282 constitué par une photodiode peuvent être identiques aux éléments correspondants 251, 240, 241, 242 de la figure 6. Dans le cas où l'émission a été réalisée par un corps noir, comme dans l'exemple de la figure 5, le signal incident sur le photodétecteur 280 est modulé temporellement. Le courant issu de la photodiode 282 contient donc l'information concernant les quatre voies de mesure. L'exploitation du signal est ainsi simplifiée et le signal issu de la photodiode 282 peut être directement traité dans un amplificateur à courant continu 270 puis numérisé dans un convertisseur analogique-numérique 260 qui délivre un signal numérique au microprocesseur 310.

Le module électronique de commande 300 illustré sur la figure 8 comprend essentiellement un microprocesseur 310 relié à la tête de mesure 20 pour recevoir par des lignes 33, 34 des informations de température et de pression, et aux blocs d'émission 100 et de réception 200 pour assurer les commandes de synchronisation à partir d'un module de synchronisation 314 et recevoir les informations numériques de tension $V_1$ $V_2$ $V_3$ $V_4$ correspondant aux différentes bandes de mesure et de référence.

Le microprocesseur 310 gère ainsi la synchronisation entre les différentes voies de mesure et assure la commande des organes mécaniques, tel que le moteur d'entraînement de la roue à filtres 170 de la figure 5, ou électriques, tel que le circuit d'ajustement de la fréquence de démodulation dans le démodulateur 220 de la figure 6. Le microprocesseur assure, par un module de test 315, le contrôle du bon fonctionnement du dispositif, comme par exemple la propreté des éléments optiques par analyse des signaux sur la voie de référence.

Le microprocesseur traite dans un module fonctionnel 311 les informations reçues pour déterminer des valeurs de transmission optique moyennes $T_1$ $T_2$ $T_3$ $T_4$ sur les différentes voies de mesure. Dans un module fonctionnel 313, le microprocesseur 310 détermine le PCS du gaz considéré, à partir des valeurs calculées dans le module 311.

Pour améliorer la qualité du résultat, il est possible d'effectuer une série de, par exemple 10, mesures successives et d'accumuler le résultat de ces dix mesures élémentaires dans un module intermédiaire 312.

La détermination du PCS après accumulation de 10 mesures reste une mesure en temps réel puisque la cadence peut être de 1 Hz. Sans accumulation de mesures, les performances du système de comptage sont un peu inférieures, mais le PCS peut être déterminé à une cadence de l'ordre de 10 Hz.

On notera que l'intérêt de la présente invention consiste à utiliser un petit nombre de bandes de mesure (trois ou quatre seulement) tout en offrant une bonne précision de mesure.

Le procédé selon l'invention permet d'obtenir le PCS avec une précision meilleure que 1 % pour une large gamme de compositions de gaz et de conditions de livraison et même à mieux que 0,35 % pour une gamme de compositions de gaz limitée.

Le procédé selon l'invention peut aussi être étendu à la détermination de paramètres complémentaires autres que le PCS dans la mesure où une relation peut être établie entre ces paramètres et l'absorption infrarouge du gaz.

Ainsi, il a pu être établi une corrélation entre le rapport du PCS à la racine carrée de la masse volumique (lequel paramètre intervient dans le calcul de l'indice de Wobbe, qui est particulièrement utile pour le réglage des conditions de combustion des brûleurs) et l'absorption infrarouge du mélange de gaz.

**Revendications**

1. Procédé de détermination en temps réel du pouvoir calorifique d'un gaz naturel par voie optique, à partir de la mesure de l'absorption d'un faisceau lumineux par les composants du gaz, selon lequel on illumine le gaz par un faisceau lumineux de caractéristiques prédéterminées, on mesure l'intensité du faisceau lumineux après traversée du gaz, et on détermine par calcul le pouvoir calorifique du gaz naturel à partir de l'absorption optique obtenue à partir de la mesure de l'intensité du faisceau lumineux après traversée du gaz,

**caractérisé en ce que** l'on illumine le gaz à l'aide d'un faisceau lumineux définissant trois bandes de mesure définissant des plages de longueurs d'onde différentes présentant chacune une largeur de 10 à 20 nm et situées dans le proche infrarouge, **en ce que** les bandes de mesure définissent des domaines de longueurs d'onde situés hors des domaines d'absorption des composants non hydrocarbonés, et **en ce que** l'on utilise en outre une bande de référence définissant une plage de longueurs d'onde de largeur comprise entre 10 et 20 nm et située dans le proche infrarouge en dehors des plages de longueurs d'onde des bandes de mesure et des domaines d'absorption du gaz.

2. Procédé selon la revendication 1, **caractérisé en ce que** les bandes de mesure sont situées dans les trois zones définies par les plages de longueurs d'onde suivantes 1,111 à 1,190 $\mu$m, 1,315 à 1,429 $\mu$m et 1,613 à 1,818 $\mu$m, dans lesquelles les hydrocarbures constituant le gaz naturel y présentent des absorptions significatives.

3. Procédé selon la revendication 2, **caractérisé en ce que** le faisceau lumineux d'illumination du gaz définit trois bandes de mesure définissant les trois plages de longueurs d'onde différentes suivantes : 1,176 à 1,190 $\mu$m ; 1,315 à 1,325 $\mu$m ; 1,62 à 1,64 $\mu$m.

4. Procédé selon l'une quelconque des revendications 1 à 3, **caractérisé en ce que** la bande de référence définit une plage de longueurs d'onde situées entre 1,24 et 1,25 $\mu$m.

5. Procédé selon l'une quelconque des revendications 1 à 4, **caractérisé en ce que** l'on mesure en outre la pression et la température du gaz et on prend en compte les valeurs de pression p et de température $\theta$ du gaz mesurées, lors de la détermination par le calcul du pouvoir calorifique du gaz naturel.

6. Procédé selon l'une quelconque des revendications 1 à 5, **caractérisé en ce que** l'on calcule le pouvoir calorifique du gaz naturel à partir de l'accumulation d'un nombre N supérieur à 5 de mesures élémentaires de l'intensité du faisceau lumineux ayant traversé le gaz.

7. Procédé selon l'une quelconques des revendications 1 à 6, **caractérisé en ce que** le faisceau lumineux définit trois bandes de mesure et **en ce que** le pouvoir calorifique spécifique (PCS) du gaz naturel est déduit de la mesure des coefficients de transmission $T_1$, $T_2$, $T_3$ du gaz naturel dans les trois bandes de mesure à l'aide de la relation suivante :

$$PCS = \alpha + \beta_1 \ln (T_1) + \delta_2 \ln (T_2) + \gamma_3 \ln (T_3)$$

où $\alpha$, $\beta_1$, $\delta_2$, et $\gamma_3$ représentent des coefficients déterminés à partir d'essais d'étalonnage.

8. Procédé selon la revendication 5 et la revendication 7, **caractérisé en ce que** le faisceau lumineux définit trois bandes de mesure et **en ce que** le pouvoir calorifique spécifique (PCS) du gaz naturel est déduit de la mesure des coefficients de transmission $T_1$, $T_2$, $T_3$ du gaz naturel dans les trois bandes de mesure à l'aide de la relation suivante :

$$PCS = (\alpha_1 (\theta/p) + \alpha_2) + (\beta_{11} (\theta/p) + \beta_{12}) \ln (T_1)$$
$$+ (\delta_{21} (\theta/p) + \delta_{22}) \ln (T_2) + (\gamma_{31} (\theta/p) + \gamma_{32}) \ln (T_3),$$

où $\alpha_1$, $\alpha_2$, $\beta_{11}$, $\beta_{12}$, $\delta_{21}$, $\delta_{22}$, $\gamma_{31}$, $\gamma_{32}$ représentent des coefficients déterminés à partir d'essais d'étalonnage.

9. Procédé selon l'une quelconque des revendications 7 et 8, **caractérisé en ce que** le coefficient de transmission Ti (i = 1 à 3) du gaz naturel dans une bande de mesure est déterminé par le rapport entre l'intensité lumineuse $I_1$ mesurée dans la bande de mesure concernée et l'intensité lumineuse $I_r$ mesurée dans la bande de référence.

**Claims**

1. A method of determining the calorific value of a natural gas optically and in real time by measuring the absorption of a light beam by the components of the gas, in which the gas is illuminated by a light beam of predetermined characteristics, the intensity of the light beam is measured after it has passed through the gas, and the calorific value of the natural gas is calculated from the optical absorption obtained on the basis of the measured intensity of the light beam after it has passed through the gas,

the method being **characterized in that** the gas is illuminated by means of a light beam defining three measurement bands defining different wavelength ranges, each having a bandwidth of 10 nm to 20 nm and situated in the near infrared, **in that** the measurement bands define wavelength ranges situated outside the absorption ranges of non-hydrocarbon components, and **in that** a reference band is also used defining a range of wavelengths having a bandwidth of 10 nm to 20 nm and situated in the near infrared outside the wavelength ranges of the measurement bands and of the absorption ranges of the gas.

2. A method according to claim 1, **characterized in that** the measurement bands are situated in three zones defined by the following wavelength ranges 1.111 $\mu$m to 1.190 $\mu$m, 1.1315 $\mu$m to 1.429 $\mu$m, and 1.613 $\mu$m to 1.818 $\mu$m, in which the hydrocarbons constituting natural gas present significant absorption.

3. A method according to daim 2, **characterized in that** the light beams illuminating the gas define three measurement bands defining the following three wavelength ranges: 1.176 $\mu$m to 1.190 $\mu$m; 1.315 $\mu$m to 1.325 $\mu$m; and 1.62 $\mu$m to 1.64 $\mu$m.

4. A method according to any one of claims 1 to 3, **characterized in that** the reference band defines a wavelength range of 1.24 $\mu$m to 1.25 $\mu$m.

5. A method according to any one of claims 1 to 4, **characterized in** the and the temperature of the gas are also and when the calorific value of the natural gas by the measured pressure $\underline{p}$ and temperature $\theta$ of the gas are taken into account.

6. A method according to any one of claims 1 to 5, **characterized in that** the calorific value of the natural gas is computed after accumulating a number N of individual measurements, of the intensity of the light beam that has passed through the gas, where N is greater than 5.

7. A method according to any one of claims 1 to 6, **characterized in that** the light beam defines three measurement bands, and **in that** the calorific value (CV) of the natural gas is deduced from the measured transmission coefficients $T_1$, $T_2$, and $T_3$ of the natural gas in the three measurement bands using the following relationship:

$$CV = \alpha + \beta_1 \ln(T_1) + \delta_2 \ln(T_2) + \gamma_3 \ln(T_3)$$

where $\alpha$, $\beta_1$, $\delta_2$, and $\gamma_3$ represent coefficients determined from calibration tests.

8. A method according to claim 5 and claim 7,
**characterized in that** the light beam defines three measurement bands, and **in that** the calorific value (CV) of the natural gas is deduced from the measured transmission coefficients $T_1$, $T_2$, and $T_3$ of the natural gas in the three measurement bands using the following relationship:

$$CV = [\alpha_1(\theta/p) + \alpha_2] + [\beta_{11}(\theta/p) + \beta_{12}]\ln(T_1)$$
$$+ [\delta_{21}(\theta/p) + \delta_{22}]\ln(T_2) + [\gamma_{31}(\theta/p) + \gamma_{32}]\ln(T_3)$$

where $\alpha$, $\alpha_2$, $\beta_{11}$, $\beta_{12}$, $\delta_{21}$, $\delta_{22}$, $\gamma_{31}$, and $\gamma_{32}$ are coefficients determined from calibration tests.

9. A method according to claims 7 and 8, **characterized in that** the transmission coefficient $T_i$, where i = 1 to 3, of the natural gas in a measurement band is determined by the ratio between the light intensity $I_i$ measured in the

measurement band concerned and the light intensity $I_r$ measured in the reference band.

**Patentansprüche**

1. Verfahren zur Bestimmung in Realzeit des Brennwerts eines Erdgases auf optischem Wege aus der Messung der Absorption eines Lichtstrahles durch die Bestandteile des Gases, gemäß welchem man das Gas mit einem Lichtstrahl mit vorbestimmten Eigenschaften beleuchtet, man die Intensität des Lichtstrahles nach Durchqueren des Gases mißt und man den Brennwert des Erdgases aus der optischen Absorption, die aus der Intensitätsmessung des Lichtstrahles nach Durchqueren des Gases erhalten ist, durch Berechnung bestimmt,
   **dadurch gekennzeichnet, daß** man das Gas mit Hilfe eines Lichtstrahles beleuchtet, der drei Meßbanden definiert, die unterschiedliche Wellenlängenbereiche definieren, wobei jeder eine Breite von 10 bis 20 nm aufweist und die im nahen Infrarotbereich gelegen sind, und **dadurch**, daß die Meßbanden Wellenlängenbereiche definieren, die außerhalb der Absorptionsbereiche der Nicht-Kohlenwasserstoffbestandteile liegen, und **dadurch**, daß man außerdem eine Referenzbande verwendet, die einen Bereich von Wellenlängen einer Breite definiert, der zwischen 10 und 20 nm liegt und im nahen Infrarotbereich außerhalb der Bereiche von Wellenlängen der Meßbanden und der Absorptionsbereiche des Gases liegt.

2. Verfahren nach Anspruch 1, **dadurch gekennzeichnet, daß** die Meßbanden in drei Zonen angeordnet sind, die durch die folgenden Wellenlängenbereiche definiert sind, 1,111 bis 1,190 $\mu$m, 1,315 bis 1,429 $\mu$m und 1,613 bis 1,818 $\mu$m, in denen die Kohlenwasserstoffe, die das Erdgas bilden, dort signifikante Absorptionen aufweisen.

3. Verfahren nach Anspruch 2, **dadurch gekennzeichnet, daß** der Lichtstrahl zur Beleuchtung des Gases drei Meßbanden definiert, die die drei folgenden unterschiedlichen Wellenlängenbereiche definieren: 1,176 bis 1,190 $\mu$m, 1,315 bis 1,325 $\mu$m, 1,62 bis 1,64 $\mu$m.

4. Verfahren nach einem der Ansprüche 1 bis 3, **dadurch gekennzeichnet, daß** die Referenzbande einen Bereich von Wellenlängen definiert, der zwischen 1,24 und 1,25 $\mu$m liegt.

5. Verfahren nach einem der Ansprüche 1 bis 4, **dadurch gekennzeichnet, daß** man ferner den Druck und die Temperatur des Gases mißt und man die Werte von Druck p und Temperatur $\ominus$ des Gases, die gemessen sind, bei der Bestimmung des Brennwerts des Erdgases durch Berechnung berücksichtigt.

6. Verfahren nach einem der Ansprüche 1 bis 5, **dadurch gekennzeichnet, daß** man den Brennwert des Erdgases aus der Ansammlung einer Anzahl N größer als 5 von Elementarmessungen der Intensität des Lichtstrahls, der das Gas durchquert hat, berechnet.

7. Verfahren nach einem der Ansprüche 1 bis 6, **dadurch gekennzeichnet, daß** der Lichtstrahl drei Meßbanden definiert und daß der spezifische Brennwert (PCS) des Erdgases aus der Messung der Transmissionskoeffizienten $T_1$, $T_2$, $T_3$ des Erdgases in den drei Meßbanden mit Hilfe der folgenden Gleichung abgeleitet wird:

$$PCS = \alpha + \beta_1 \ln(T_1) + \delta_2 \ln(T_2) + \gamma_3 \ln(T_3)$$

wobei a, $\beta_1$, $\delta_2$ und $\gamma_3$ die aus Kalibrierversuchen bestimmten Koeffizienten darstellen.

8. Verfahren nach Anspruch 5 und Anspruch 7, **dadurch gekennzeichnet, daß** der Lichtstrahl drei Meßbanden definiert und **dadurch**, daß der spezifische Brennwert (PCS) des Erdgases aus der Messung der Transmissionskoeffizienten $T_1$. $T_2$, $T_3$ des Erdgases in den drei Meßbanden mit Hilfe der folgenden Gleichung abgeleitet wird:

$$PCS = (\alpha_1 (\Theta/p) + \alpha_2) + (\beta_{11} (\Theta/p) + \beta_{12}) \ln(T_1)$$
$$+ (\delta_{21} (\Theta/p) + \delta_{22}) \ln(T_2) + (\gamma_{31} (\Theta/p) + \gamma_{32}) \ln(T_3),$$

wobei $\alpha_1$, $\alpha_2$, $\beta_{11}$, $\beta_{12}$, $\delta_{21}$, $\delta_{22}$, $\gamma_{31}$, $\gamma_{32}$, Koeffizienten darstellen, die aus Kalibrierversuchen bestimmt sind.

9. Verfahren nach einem der Ansprüche 7 und 8, **dadurch gekennzeichnet, daß** der Transmissionskoeffizient Ti (i = 1 bis 3) des Erdgases in einer Meßbande bestimmt wird durch das Verhältnis zwischen der Lichtintensität $I_1$, die gemessen wird in der betreffenden Meßbande und der Lichtintensität $I_r$, die gemessen wird in der Referenzbande.

FIG.1

300

100

24

200

20

25

10

FIG.2

1

3

4

5

6

24

25

20

2

20

33

34

31

32

22

21

28

24

23

26

2

25

27

29

FIG.3

FIG.4

FIG.5

# FIG.6

# FIG.7

# FIG.8